# EUROPEAN PATENT SPECIFICATION

(11) **EP 1 763 858 B1**
(45) Date of publication and mention of the grant of the patent: **03.11.2010**
(21) Application number: 05760570.1
(22) Date of filing: 20.06.2005
(51) Int. Cl.: G08B 15/00, F21S 8/08, G08G 1/00

(54) **LIGHTING APPARATUS WITH INTEGRATED WARNING EQUIPMENT AND DATA COLLECTION EQUIPMENT**
BELEUCHTUNGSVORRICHTUNG MIT INTEGRIERTEN WARNGERÄTEN UND DATENSAMMELGERÄTEN
APPAREIL D'ECLAIRAGE A DISPOSITIF D'ALARME ET DISPOSITIF DE RECUEIL DE DONNEES INTEGRES

(30) Priority: 05.07.2004 IT MI20040327 U
(43) Date of publication of application: 21.03.2007
(73) Proprietor: Fucci, Massimo, 15100 Alessandria (IT)
(72) Inventor: Fucci, Massimo, 15100 Alessandria (IT)
(86) International application number: PCT/IT2005/000358
(87) International publication number: WO 2006/003686

(56) References cited:
- WO-A-00/63612
- WO-A-2004/095386
- FR-A- 2 714 755
- FR-A1- 2 838 224
- JP-A- 7 146 502
- US-A1- 2002 154 218
- US-B1- 6 456 322
- PATENT ABSTRACTS OF JAPAN vol. 2003, no. 10, 8 October 2003 (2003-10-08) & JP 2003 163091 A (TOSHIBA LIGHTING & TECHNOLOGY CORP), 6 June 2003 (2003-06-06)

## Description

### TECHNICAL FIELD

The invention hereunder refers to a road lighting system equipped with integrated warning equipment and data collection equipment, to be used (for example) for urban and non-urban traffic control and management.

The combined presence of data collection equipment and warning equipment enables the apparatus (among other things) to detect and signal dangerous traffic situations (accidents, queues, icy or slippery road conditions, road works), to monitor access to restricted or private areas, and to measure driving speed, interacting in an intelligent manner with the surrounding environment in which it is installed:

### BACKGROUND ART

Lighting apparatuses - typically in the shape of lampposts - equipped with one or more warning devices in addition to the conventional lighting source are a well-known technical application. The warning equipment normally comprises an auxiliary light source, which may be used to signal, for example, a malfunctioning in the lighting apparatus or even a dangerous situation on the road close to the lamppost. These apparatuses, however, perform a mere warning function and are not capable of interacting with the surrounding environment.

Road-side apparatuses equipped with sensors designed to measure (for example) the speed of passing vehicles are also already known. However, in order to be installed in the proximity of the road, such apparatuses require dedicated support structures and are often plainly visible and at the mercy of all sorts of vandal attacks. They also need a dedicated power supply line, which remarkably increases installation costs.

Document US 2002/0154218 discloses a covert surveillance system whereby a camera arrangement is incorporated to a street lamp via a radio receiver, the camera can be controlled remotely.

Document WO 00/63612 discloses a road lighting apparatus containing auxiliary signaling means.

Document FR 2 714 755 discloses a vehicle speed telemetry system inarporated to the road lighting network.

Finally, document FR 2 838 224 discloses an outdors monitoring fixture incorporating environmental and vehicle speed sensors as well as lighting means.

### DISCLOSURE OF INVENTATION

The general purpose of the invention hereunder is to offer a solution to all of the above mentioned difficulties by introducing a road lighting system according to claim 1 which is also capable of collecting data in order to enable interaction with the surrounding environment.

Another purpose of the invention hereunder is to provide a road lighting system according to claim 1, which features a compact, integrated, and sufficiently low-cost design, lighting apparatus.

To achieve the above objectives, the lighting apparatus constructed hereunder includes an external case containing the lighting source, warning equipment and data collection equipment, the warning equipment and data collection equipment being situated at least partly inside the above external case and the warning equipment being controlled on the basis of the data collected by the data collection equipment.

### BRIEF DESCRIPTION OF DRAWINGS

In order to clarify the innovative principles inherent in this invention, as well as its advantages to prior art, the following section describes a possible application of such principles, with the aid of the attached figures, where by:
- figure 1 is a side view of a lighting apparatus constructed according to the invention hereunder;
- figure 2 is an underside view of the apparatus depicted in figure 1.

### BEST MODE FOR CARRYING OUT THE INVENTION

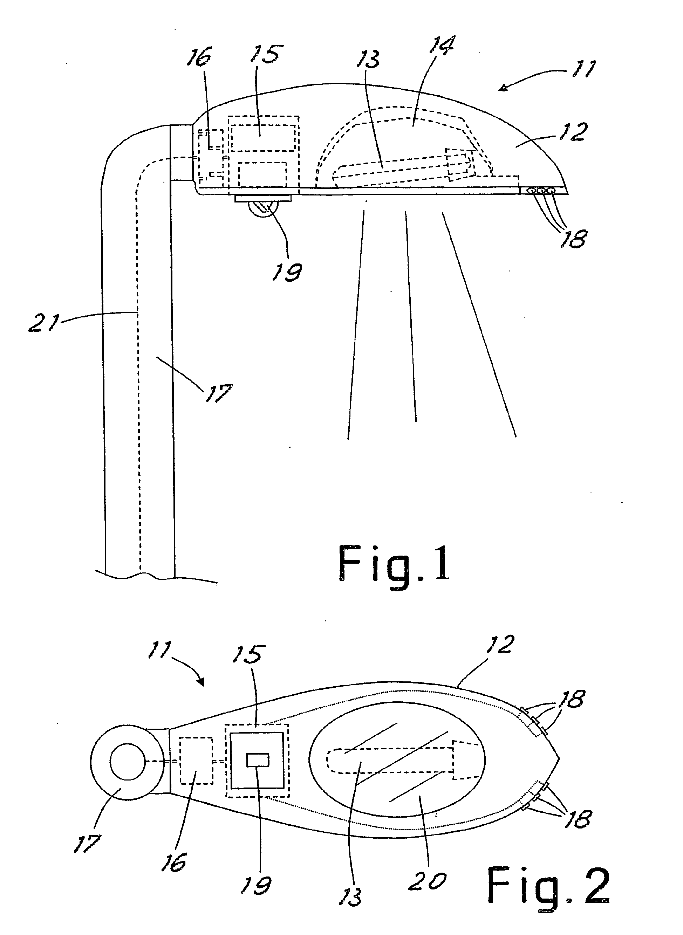

In particular, figure 1 shows a side view of a lighting apparatus 11 including an external case 12 containing a lighting source 13.

The external case 12 comprises a halved shell identical to that used for standard lampposts and can be supported by a post 17.

The case 12 also contains a reflector 14 which is shaped to optimise the photometric performances of the light source 13 and which interferes with but improves the efficiency of the data collection equipment 19, on the basis of known lighting engineering principles.

According to the invention hereunder the case 12 contains the data collection equipment 19. The data collection equipment 19 could include a cctv camera or, alternatively, a speed sensor (to measure driving speed). Other examples of data collection equipment would be an environmental sensor (to measure temperature, humidity, pressure, ice presence, etc.), a doppler radar or other types of sensors.

The lighting apparatus 11 is equipped with warning equipment 18, in the form, of warning lights. The warning devices 18 are capable of emitting different colour lights and may be used to inform motorists on traffic, dangerous situations, accidents, icy road conditions, etc.. As shown in the figure, the warning devices 18 may be conveniently positioned at the apparatus's front end so that they can be easily seen by motorists and passers-by.

Examplarily, the external case 12 could also contain data processing equipment 15; the processing equipment 15 is connected to the data collection equipment 19 and to the warning equipment 18 and is capable of controlling the warning equipment based on the data collected by the lighting apparatus 11.

The processing unit 15 enables the apparatus to process the information locally and interact in an intelligent manner with the environment.

Note that the processing unit 15, the data collection equipment 19 and the warning equipment 18 may be powered through a supply unit 16. The power supply unit is situated inside the case 12 near the post 17 and can be conveniently connected to the post's electrical cable 21.

According to the invention the lighting apparatus constructed without the processing unit 15. Data is transmitted to a remote data processing station, for example through the electrical cable 21 or through another transmission system. This allows to monitor from a remote position the environmental conditions of the area surrounding the lighting apparatus and to centrally control the warnings given by the various apparatuses positioned along the same road.

Figure 2 shows an underside view of the apparatus constructed according to the invention hereunder. Such figure also sketches the connection between the processing unit 15 and the warning equipment 18 at the front end of the external case 12. As commonly seen in prior art, the light source 13 could be sealed with a glass cover 20.

### INDUSTRIAL APPLICABILITY

We can now clearly see how the invention's purposes have been achieved. Indeed, the road lighting system constructed according to the invention hereunder allows to combine the data collection function, the warning function and the conventional lighting function (including street lighting) into a single device.

This integrated design makes the apparatus suitable to monitor public or private areas (e.g.: shopping centre indoor and outdoor areas, hotels, underground stations, transport vehicles, etc.) and urban and non-urban road sections, collecting images, sounds or other information, depending on the type of sensor installed on the apparatus.

The data collection equipment can monitor access to restricted areas, measure driving speed and collect environmental data or other information.

Data is processed remotely (by transmitting the data to a remote processing station). Once the data collected have been processed, they may be used as a basis to control the warning equipment fitted on the apparatus as per the invention hereunder, thus ensuring a high degree of interactivity with the external environment. The warning devices which include warning lights, and may also be sound other type- can be used to warn users of dangerous road sections, junctions, queues, hold-ups, adverse weather conditions, vehicle exits, schools, etc..

Furthermore, the data collection equipment is barely visible to passers-by and is not at the mercy of vandal attacks. Lastly, the apparatus's integrated design allows to make optimal use of existing lamppost support structures, creating compact and low-cost solutions.

Note that the data collection and warning equipment could be built into the lighting apparatus at the time of construction, or, alternatively, the data collection and warning equipment could be installed into an existing lighting apparatus at a later time.

Obviously, the above description of the innovative principles inherent in the invention hereunder constitutes a mere example of how such innovative principles could be applied and shall not be construed as a limitation to the scope of the property rights claimed hereunder.

## Claims

1. A road lighting system, comprising a remote data processing station and a plurality of road lighting apparatuse positioned along the same road, each road lighting apparatus including:
- a case (12) containing a lighting source (13),
- data collection equipment (19), including sensors measuring the speed of vehicles driving along the road lit by the apparatus and environmental sensors, or alternatively the data collection equipment including a cctv camera (19),
- warning equipment (18), including warning lights in different colours arranged at the front end of the apparatus in order to be seen by passers-by, the warning equipment and data collection equipment being situated at least partly inside the case of the lighting apparatus, and
or, alternatively
- transmission equipment arranged to transfer the collected data to said remote data processing station,
**charactenized in that**
said remote data processing station is arranged to monitor the data collected from the plurality of lighting apparatuses and to centrally control the warning equipments of the plurality of lighting apparatuses based on the collected data.

## Patentansprüche

1. Ein Straßenbeleuchtungssystem, das eine entfernte Datenverarbeitungseinheit und mehrere Straßenbeleuchtungsgeräte, die in derselben Straße positioniert sind, umfasst, wobei jedes Straßenbeleuchtungsgerät umfasst:
- eine Schutzhülle (12), die eine Lichtquelle (13) enthält,
- eine Datenerfassungseinheit (19) mit Sensoren zur Messung der Geschwindigkeit von Fahrzeugen die entlang der Straße, die durch den Geräten beleuchtet ist, fahren, und Umweitsensoren oder aber auch die Datenerfassungseinheit mit einer cctv-Kamera,
- Warneinheit (18) mil verschiedenfarblgen Warnlichtern am vorderen Teil des Gerätes, sodass sie sichtbar von Verkehrsteilnehmer sein könnten, wobei die Warneinheit und die Datenerfassungseinheit wenigstens teilweise innerhalb der Schutzhülle des Beleuchlungsgeräts gelegen sind, und
- eine Übertragungseinheit zur Übertragung der erfassten Daten zur entfernte Datenverarbeitungseinheit,
**gekennzeichnet dadurch, dass** die entfernte Datenverarbeitungseinhelt angeordnet ist um die Daten, die von mehreren Straßcnbeleuchtungsgeräten erfassen sind, zu überwachen und um die Warneinheit der mehreren Straßenbeleuchtungsgeräten aufgrund der erfassten Daten zentral zu kontrollieren.

## Revendications

1. Un dispositif d'éclairage de la route comprenant une station d'élaboration de données éloignée et plusieurs appareils d'éclairage de la route positionnés sur la même route, comprenant:
- un boîtier (12) contenant une source de lumière (13)
- moyens de relèvement de données (19) qui comprennent capteurs de relèvement de la vitesse des véhicules qui transitent sur la route éclairée par le dispositif et capteurs des conditions du milieu, ou bien, en alternative, les moyens de relèvement comprennent une caméra cctv (19)
- moyens de signalisation (18) comprenant indicateurs lumineux de différentes couleurs disposés dans la partie antérieure du dispositif de façon à être visibles aux passants, les moyens de signalisation et de relèvement des données se trouvant au moins partiellement à l'interieur du boîtier du dispositif d'éclairage
- moyens de transmission de données agencés pour transmettre les données relevées à ladite station d'élaboration de données éloignée,
**caractérisé en ce que** ladite station d'élaboration de données est agencée pour contrôler les données relevées par plusieurs dispositifs d'éclairage et contrôler de façon centralisée les appareils de signalisation des plusieurs dispositifs d'éclairage selon les données relevées.
